# EUROPEAN PATENT SPECIFICATION

(11) **EP 3 466 860 B1**
(45) Date of publication and mention of the grant of the patent: **24.06.2020**
(21) Application number: 18198398.2
(22) Date of filing: 03.10.2018
(51) Int. Cl.: B66C 13/06, B66C 23/86

(54) **DAMPING SYSTEM, DAMPING METHOD AND CRANE COMPRISING IT**
DÄMPFUNGSSYSTEM, DÄMPFUNGSVERFAHREN UND KRAN DAMIT
SYSTÈME D'AMORTISSEMENT, PROCÉDÉ D'AMORTISSEMENT ET GRUE LE COMPRENANT

(30) Priority: 06.10.2017 DK PA201700560
(43) Date of publication of application: 10.04.2019
(73) Proprietor: HMF Group A/S, 8270 Hojbjerg (DK)
(72) Inventor: Ballebye, Morten, 8320 Mårslet (DK); Brændgaard, Gudmund, 8660 Skanderborg (DK)
(74) Representative: Andreasen, Søren Laursen Vasegaard

(56) References cited:
- EP-A1- 0 756 574

## Description

### Field of invention

The present invention relates to a system and a method for damping oscillations in a moveably arranged crane structure, said crane structure being an arm or other structure of a crane movably arranged by hydraulic means.

### Prior art

In various types of cranes, including the outer-boom type, the movements are typically carried out by means of hydraulic motors. Some movements are carried out by means of hydraulic cylinders configured to provide linear movements, whereas other movements are carried out by means of hydraulic motors adapted to provide angular movements.

Horizontal slewing of a crane arm between various azimuth positions is typically carried out by using a slewing arrangement comprising two integrated hydraulic actuators (hydraulic cylinders) interconnected by a common toothed rack engaging with a gear wheel of the crane arm, wherein the crane arm is rotatably mounted with respect to the axial axis of the gear wheel. The crane arm is normally mounted by means of a gear wheel engaging a toothed rack being connected at the opposite ends to said linear hydraulic actuators each provided with a piston defining two operating chambers. The hydraulic actuators are typically part of a hydraulic circuit comprising a directional valve configured to direct oil from a hydraulic pump to the hydraulic actuators through two different conduits, whereas displaced oil is directed to a tank.

In some cranes, a manual adjustment lever connected to the directional valve. In these cranes, by moving the adjustable lever of the directional valve between a neutral position and two operative positions the crane arm can be stopped, slewed clockwise or slewed anti-clockwise, respectively. In some cranes, the directional valve is activated by means of an actuator connected to a control unit. This control unit may be controlled by a remote control being connected to the controls unit by means of wires or wirelessly.

It is a well-known problem, that both the crane arm and the load carried by the crane arm are subject to oscillatory or reciprocating motions when the crane arm finishes slewing. This problem typically arises when the adjustment lever of the directional valve (or alternatively the remote) has been returned to the neutral position. This is in particularly a problem when the centre of gravity of the load located in a large distance from the point, in which the load is fixed to the crane arm (in case the crane arm is carrying a freely hanging load). Accordingly, the problem is significant in cranes having a large lifting height.

The duration of the oscillatory or reciprocating motions of the crane arm and the load it carries may be long (e.g. up to 25 seconds). In long boom cranes, the tip of the crane arm may be displaced as much as one metre during the oscillatory or reciprocating motion. The duration of the motions may be 15 to 25 seconds before the tip hereby the load is stopped. Long duration of the motions may be inconvenient for the crane drivers and may cause unsafe situations. Moreover, large amplitude movements will deflect the crane structures to a larger extent than movements having smaller amplitude. The degree of deflection is a major determinant on fatigue strength of the crane structures. Accordingly, the life time of crane structures can be increased by decreasing the amplitude of the movements. Accordingly, it would be desirable to be able to reduce the amplitude and duration of the oscillatory or reciprocating motions.

When a crane is operated, the temperature of the hydraulic oil increases. The volume of hydraulic oil is increased when the temperature is increased. When the crane is stopped and the temperature decreases (e.g. when the ambient temperatures are low in winter time) the volume of the hydraulic oil in the hydraulic actuators decreases. If the hydraulic oil has a low temperature when the crane is started up, the volume of the hydraulic oil is reduced and thus the operation of the crane can be difficult to control because of the hydraulic clearance (play). Accordingly, it would be desirable to have a system, in which this disadvantage can be prevented.

Several attempts have been made to reduce the long duration of these oscillations. The Swedish patent SE508992C2 discloses a damping unit which is installed in a branch or intermediate conduit bridging the main conduits between a directional valve and hydraulic cylinders. The damping unit is formed as a flow limiter associated with a co-operating shut-off device comprising a piston captive in a cylinder and freely movable between opposite end positions, wherein the piston shuts off the oil flow through the flow limiter when it reaches an end position. When the oil passes the flow limiter, a turbulent flow in the oil is generated, whereby the hydraulic energy in the system is converted to heat. Accordingly, the energy remaining in the system is dissipated, and the duration of the oscillations of the crane arm is reduced.

This solution is, however, associated with several drawbacks. First of all, damping is not possible when the piston is arranged in its end position. Moreover, the piston of the damping cylinder may be positioned in more than one distinct position when damping is no longer required. Accordingly, hydraulic oil may flow via the flow limiter and further through to one of the hydraulic actuators. Therefore, the crane arm will often not be positioned in a positively stationary position because the crane arm can only swing freely within a limited range. This is in particular a problem a during loading on inclined ground.

Secondly, since the shut-off piston in the damping cylinder moving freely all the way to the end position, the function of the flow limiter becomes irregular and unpredictable. This means that the shut-off piston abruptly can interrupt further flow, hereby preventing damping to occur. Accordingly, the solution provides an undesired damping and slewing function associated with hydraulic clearance (play).

EP0756574B1 discloses a device for damping undesirable oscillations of a pivotally mounted crane arm according to the preamble of claim 1. The device comprises a hydraulic circuit having a restriction co-operating with a circuit-closing device the purpose of the restriction being to convert energy inherent in the system to heat in the hydraulic oil. This device for damping can redistribute the hydraulic oil being available in the hydraulic circuit.

EP2067911A1 discloses a method and a device for suppressing vibrations of a boom of a concrete pump truck. Both the method and the device applies a separate dedicated vibration suppression cylinder for providing the required damping. Accordingly, this solution is rather expensive and requires a dedicated valve and valve controller. Accordingly, it would be an advantage to have a simpler system for damping undesirable oscillations (vibrations).

It is an object to provide a simpler system for damping undesirable oscillations (vibrations).

WO2016011193 discloses a hydraulic system and a method for reducing boom dynamics of a boom, while providing counter-balance valve protection. The system applies a hydraulic actuator, a first and a second counter-balance valve and two independent control valves as well as two blocking valves. The actuator includes first and second corresponding chambers. In a first mode, the second counter-balance valve is opened by the first control valve, and the first counter-balance valve is opened by the second control valve. In a second mode, at least one of the counter-balance valves is closed. The system is configured to provide boom dynamics reduction while the boom is in motion. By opening the counter-balance valves, sensors at the control valves can be used to detect the magnitude of external loads so that the control valves will respond to the external loads and thus at least partially cancel unwanted boom dynamics. This system, however, requires a configuration that is not present in many crane systems. Accordingly, the proposed method cannot be carried out in a plurality of prior art crane systems.

EP0756574A1 discloses a device for damping undesirable oscillations of a crane member which is pivotally movable by means of at least one hydraulic motor. The hydraulic circuit has a restriction co-operating with a circuit-closing device in order to convert energy inherent in the system to heat in the hydraulic oil. The device comprises a control unit and pressure sensors arranged to detect the pressure within predefined portions og the system. The control unit is configured to control the circuit-closing device. This system requires several sensors and an electronic control unit. Accordingly, it would be desirable to have a simpler system for damping undesirable oscillations of a crane member.

It is an object of the present invention to provide an alternative system and an alternative method for damping oscillations in a moveably arranged crane structure.

It is an object of the present invention to provide a system and a method, in which the oscillatory or reciprocating motions of the crane structure can be reduced.

It is a further object of the present invention to provide a system and a method, in which hydraulic clearance (play) can be prevented, in particularly when the crane is started up with cold hydraulic oil.

It is an even further object of the present invention to provide a system and a method, in which the amplitude of the oscillatory or reciprocating motions of the crane structure can be reduced so that the life time of crane structures can be increased.

### Summary of the invention

The object of the present invention can be achieved by a system as defined in claim 1 and by a method as defined in claim 11. Preferred embodiments are defined in the dependent subclaims, which are further explained in the following description and illustrated in the accompanying drawings.

The system according to the invention is a system for damping undesired oscillations in a movably arranged crane structure being hydraulically driven by means of an arrangement comprising at least one hydraulic actuator mechanically connected to an engagement structure attached to the crane structure, wherein the at least one hydraulic actuator is in fluid communication with a hydraulic unit through one or more conduits, wherein said hydraulic unit is connected to a hydraulic pressure source, wherein the hydraulic unit comprises a valve configured to direct hydraulic oil from the hydraulic pressure source, to the at least one hydraulic actuator, wherein the system comprises a damping member comprising an additional hydraulic unit hydraulically connected to the hydraulic pressure source and to the at least one hydraulic actuator, where the additional hydraulic unit is connected to the hydraulic pressure source via a conduit arranged in such a manner that an additional hydraulic oil flow can be delivered to the additional hydraulic unit by the hydraulic pressure source without flowing through the hydraulic unit, whereby the additional hydraulic unit is configured to deliver an additional hydraulic oil flow and hereby damp the motion of the at least one hydraulic actuator.

Hereby, it is possible to reduce the oscillatory or reciprocating motions of the crane structure. Furthermore, hydraulic clearance (play) can be prevented, in particularly when the crane is started up with cold hydraulic oil. Additionally, the amplitude of the oscillatory or reciprocating motions of the crane structure can be reduced so that the life time of crane structures can be increased.

The crane structure may in principle be any structure in a crane being movably arranged and being hydraulically driven by means of an arrangement comprising at least one hydraulic actuator mechanically connected to an engagement structure attached to the crane structure. The crane structure may be a crane arm.

The at least one hydraulic actuator is in fluid communication with a hydraulic unit through one or more conduits. Hereby, pressurised hydraulic oil can be delivered to the at least one hydraulic actuator by the hydraulic unit. Likewise, the hydraulic unit may receive hydraulic oil from the at least one hydraulic actuator.

The at least one hydraulic actuator may be one or more linear hydraulic actuators.

The at least one hydraulic actuator may be one or more hydraulic motors configured to convert hydraulic pressure and flow into torque and angular displacement (rotation).

In a preferred embodiment, the system comprises a first hydraulic cylinder (actuator) and a second hydraulic cylinder (actuator), wherein said first hydraulic cylinder and second hydraulic cylinder constitute a single hydraulic actuator assembly, wherein said hydraulic cylinders are mechanically connected to each other in such a manner that motion of one hydraulic cylinder causes a corresponding motion of another hydraulic cylinder.

The hydraulic unit is connected to a hydraulic pressure source. The hydraulic pressure source may be any suitable type of hydraulic pressure source.
The hydraulic pressure source may be a hydraulic pump connected to a hydraulic oil tank.

The hydraulic unit comprises a valve configured to direct hydraulic oil from the hydraulic pressure source. The valve may, preferably be a directional valve e.g. control valve comprising an electronic actuator.

The valve may be a directional control valve comprising an electronic actuator configured to be electrically controlled my means of a control unit.
The system comprises a damping member comprising an additional hydraulic unit hydraulically connected to a hydraulic pressure source.

The hydraulic pressure source may be any suitable type of hydraulic pressure source.

The hydraulic pressure source may be a hydraulic pump connected to a hydraulic oil tank.

The additional hydraulic unit is hydraulically connected to the at least one hydraulic actuator, whereby the additional hydraulic unit is configured to deliver an additional hydraulic oil flow and hereby damp the motion of the at least one hydraulic actuator.

Hereby, additional hydraulic oil is added to the at least one hydraulic actuator. In particular, this is an advantage because it enables an effective damping of the at least one hydraulic actuator. Secondly, the solution is an advantage when a crane is started up when the hydraulic oil is cold and the risk of hydraulic clearance (play) is high because the volume of the hydraulic oil is lower than when the hydraulic oil was heated during previous operation of the crane.

It may be an advantage that the crane structure is being hydraulically driven by means of an arrangement comprising:
- a first hydraulic actuator having a piston connected to a first end of a connection rack;
- a second hydraulic actuator having a piston connected to a second end of the connection rack, wherein said connection rack comprises an engagement portion engaging a corresponding engagement portion of an engagement structure attached to the crane structure, wherein the damping member is configured to provide an increased pressure causing an increased force onto at least one of the pistons, said force being directed toward the other piston.

Hereby, the force will damp the motion of the hydraulic actuator and thus reduce the oscillations of the crane structure.
The connection rack may preferably be a toothed rack having a centrally arranged toothed portion.

It may be beneficial that the engagement structure is a gear wheel (a toothed wheel) configured to engage with the toothed portion of the toothed rack.

It may be advantageous that the piston of the first hydraulic cylinder is attached to the first end portion of the connection rack and that the piston of the second hydraulic cylinder is attached to the opposite end portion of the connected rack. Hereby, it is possible to apply a reliable and available construction used in prior art cranes.

It may be an advantage that the crane structure is hydraulically driven by means of an arrangement comprising a hydraulic motor mechanically connected to a gear wheel brought into engagement with corresponding engagement portion (teeth) of a toothed wheel attached to the crane structure.

This construction is an alternative to the one using two linear hydraulic actuators.

It may be beneficial that the system comprises a hydraulic unit which is hydraulically connected to a hydraulic pump by means of a first conduit for returning hydraulic oil to the tank and another conduit for receiving pressurised hydraulic oil from the hydraulic pump.

The hydraulic unit may preferably be hydraulically connected to a first port of the hydraulic motor via a first conduit and to a second port of the hydraulic motor via a second conduit.
It may be beneficial that the system comprises a damping member, configured to deliver additional hydraulic oil to the hydraulic motor in order to damp the oscillations.

It may be an advantage, that the damping member is configured to pre-pressurise the hydraulic motor in order to increase the "stiffness" of the arrangement responsible to rotate the crane arm.

It may be advantageous that the hydraulic actuators comprise a liquid-filled rear chamber and that the damping member comprises or is connected to a hydraulic pressure source being in fluid communication with the rear chamber of at least one of the hydraulic actuators, preferably both hydraulic actuators.

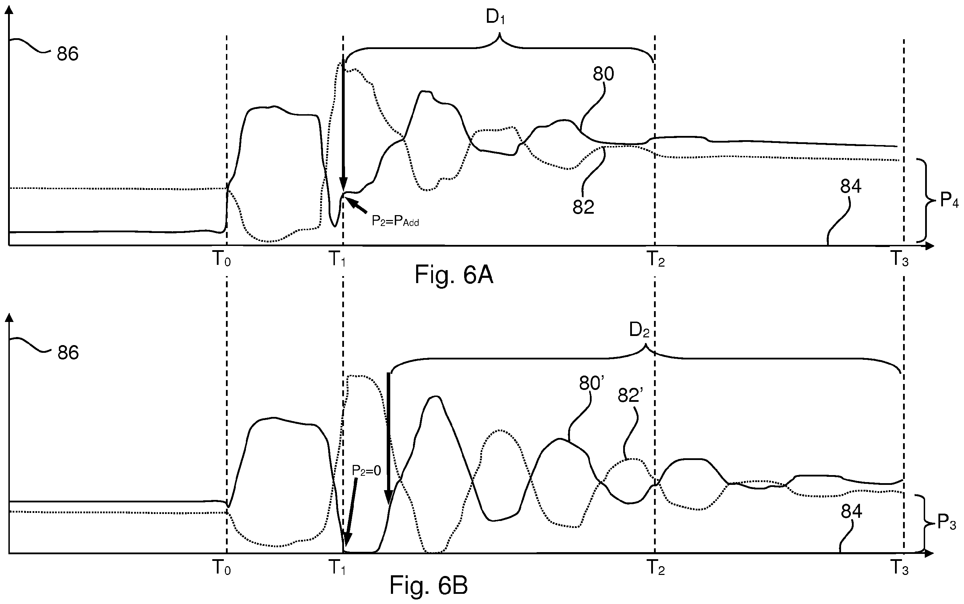

Hereby, the damping member delivers additional hydraulic oil to the rear chamber when the pressure in the rear chamber is below the pressure in the conduct extending between the damping member and the rear chamber. Moreover, the damping member is capable of delivering a predefined initial pressure (e.g. 50, 100, 150 or 200 bar) in the rear chamber, whereas the initial pressure in the rear chamber is close to zero when a horizontal slewing process as stopped (as explained with reference to Fig. 6B). Hereby, the stiffness of the hydraulic actuator is increased and the dampen effect is present instantaneously when the crane arm handle or control unit is set in the "neutral position".

The rear chamber should preferably be filled with hydraulic oil.

It may be beneficial that the hydraulic pressure source is a hydraulic pressure source of the crane.

In one embodiment according to the invention, the hydraulic pressure source is a hydraulic pump.

It may be advantageous that the damping member comprises a pressure reducing valve and a control valve. Hereby, the pressure reducing valve can reduce the pressure delivered from the hydraulic pressure source to a predefined level.

In one embodiment according to the invention, the system comprises a control unit configured to control the pressure reducing valve.

In one embodiment according to the invention, the system comprises a control unit configured to control the control valve. Hereby, the pressure supplied from the damping member to the at least one hydraulic actuator can be controlled and varied if desired.

In a preferred embodiment according to the invention, the system comprises a control unit configured to control the control valve on the basis of one or more set and/or monitored parameters.

It may be an advantage that the system comprises a control unit configured to control the control valve in a manner, in which the pressure of the hydraulic oil supplied to the at least one hydraulic actuator can vary as function of time.

It may be advantageous that the system comprises a control unit configured to control the pressure provided by the additional hydraulic unit in dependency of one or more parameters being either predefined (set by using a control unit) and/or being monitored by one or more sensors.

It may be an advantage that the control unit is configured to control the pressure provided by the additional hydraulic unit in such a manner that the pressure varies as function of time.

It may be advantageous that the system comprises one or more sensors for detecting one or more parameters, wherein the one or more sensors include an inclination sensor, a sensor configured to monitor either linear position and/or linear velocity and/or angular position and/or angular velocity, a temperature sensor (e.g. for detecting the temperature of the hydraulic oil), a pressure sensor, flow sensor or a sensor for detecting the distance between the point in which a load is fixed to a crane arm and a position of the load (e.g. the uppermost position of the load, the lowermost position of the load, the middle position of the load or the centre of mass of the load).Hereby, it is possible to provide an intelligent regulation of the damping procedure. It is possible to optimize the damping procedure and consider various external conditions such as the ambient temperature, the pressure of one or more conduits and/or hydraulic actuators, a distance, position or velocity or the inclination of a crane.

In one embodiment according to the invention the system comprises a sensor for detecting the distance between the load and the point about which the crane arm is rotated.

In one embodiment according to the invention the control unit is configured to control the pressure provided by the additional hydraulic unit in such a manner that the pressure at least partly depends on the position of the pistons in the hydraulic cylinders.

In one embodiment according to the invention the control unit is configured to control the pressure provided by the additional hydraulic unit in such a manner that the pressure depends on the inclination of the crane.

It may be beneficial that the pressure provided by the additional hydraulic unit is a linear function of the inclination of the crane.

In one embodiment according to the invention pressure provided by the additional hydraulic unit is a decreasing function of the inclination of the crane. It is possible to decrease the pressure provided by the additional hydraulic unit from a predefined pressure level at zero-degree inclination to zero pressure or close to zero pressure level at a pre-set inclination level (e.g. 5 degrees relative to horizontal).

In one embodiment according to the invention the pressure provided by the additional hydraulic unit is an increasing function of at least one measured pressure (e.g. the pressure in a hydraulic cylinder). Accordingly, the pressure provided by the additional hydraulic unit is high when the measured pressure (e.g. the pressure in a hydraulic cylinder) is high.

It may be beneficial that the system comprises one or more replenishment ports for replenishing hydraulic oil to the hydraulic actuator(s)
Hereby, replenishing hydraulic oil to the hydraulic actuator(s) (e.g. hydraulic cylinder(s)) can be established by means of said replenishment ports.

The method according to the invention is a method for dampen undesired oscillations in a movably arranged crane structure being hydraulically driven by means of an arrangement comprising at least one hydraulic actuator mechanically connected to an engagement structure attached to the crane structure, wherein the hydraulic actuator is in fluid communication with a hydraulic unit through one or more conduits, wherein said hydraulic unit is connected to a hydraulic pressure source, wherein the hydraulic unit comprises a valve configured to direct hydraulic oil from the hydraulic pressure source, to the hydraulic actuator, wherein the method comprises the step of dampen the motion of the hydraulic actuator by means of a damping member comprising an additional hydraulic unit hydraulically connected to a hydraulic pressure source and to the hydraulic actuator, by delivering an additional hydraulic oil flow and hereby damping the motion of the hydraulic actuator by means of the additional hydraulic unit, where the additional hydraulic unit is connected to the hydraulic pressure source via a conduit arranged in such a manner that an additional hydraulic oil flow can be delivered to the additional hydraulic unit by the hydraulic pressure source without flowing through the hydraulic unit.

Hereby, it is possible to reduce the oscillatory or reciprocating motions of the crane structure. Furthermore, hydraulic clearance (play) can be prevented, in particularly when the crane is started up with cold hydraulic oil. Additionally, the amplitude of the oscillatory or reciprocating motions of the crane structure can be reduced so that the life time of crane structures can be increased.

In one embodiment, the method applies an arrangement, wherein the at least one hydraulic actuator constitutes a single hydraulic actuator assembly comprising one or more hydraulic actuators being mechanically connected to each other so motion of one hydraulic actuator causes a corresponding motion of another hydraulic actuator.

It may be advantageous that the crane structure is being hydraulically driven by means of an arrangement comprising:
- a first hydraulic cylinder having a piston connected to a first end of a connection rack;
- a second hydraulic cylinder having a piston connected to a second end of the connection rack, wherein said connection rack comprises an engagement portion engaging a corresponding engagement portion of an engagement structure attached to the crane structure, wherein the method comprises the following step:
- providing a force onto one of the pistons, said force being directed toward the other piston.

Hereby, the force will damp the motion of the hydraulic actuator and thus reduce the oscillations of the crane structure.

It may be beneficial that the crane structure is hydraulically driven by means of an arrangement comprising a hydraulic motor mechanically connected to a gear wheel brought into engagement with corresponding engagement portion (teeth) of a toothed wheel attached to the crane structure, wherein the method comprises the step of delivering an additional hydraulic oil flow and hereby damping the motion of the at least one hydraulic motor by means of the additional hydraulic unit.

It may be advantageous that the method comprises the step of applying a control unit configured to control the pressure provided by the additional hydraulic unit in dependency of one or more parameters being either predefined (set by using a control unit) and/or being monitored by one or more sensors.

It may be an advantage that the method comprises the step of controlling the pressure provided by the additional hydraulic unit in such a manner that the pressure varies as function of time.

It may be an advantage that the method comprises the step of controlling the pressure at least partly on the basis of signals provided by one or more sensors for detecting one or more parameters, wherein the one or more sensors include an inclination sensor, a velocity sensor configured to monitor either linear velocity and/or angular velocity, temperature sensor (e.g. temperature of the hydraulic oil, pressure sensor, flow sensor.

In one embodiment according to the invention the method comprises the step of controlling the pressure at least partly on the basis of the distance between the load and the rotational axis of the crane arm. Said distance may preferably be detected by means of one or more sensors.

The system and method according to the invention may be used to increase the stability of the moveably arranged crane structure during operation thereof. The system and method according to the invention may be used for damping oscillations in a moveably arranged crane structure during lifting and lowering actions and to increase the stability of the moveably arranged crane structure.

The crane according to the invention comprises a system according to invention. When operating a crane provided with a system according to the invention it is possible to provide an improved crane, in which oscillations in a moveably arranged crane structure can be damped during lifting and lowering actions. Furthermore, it is possible to increase lifetime of the moveably arranged crane structure.

### Description of the Drawings

The invention will become more fully understood from the detailed description given herein below. The accompanying drawings are given by way of illustration only, and thus, they are not limitative of the present invention. In the accompanying drawings:
- Fig. 1A: shows a schematic top view of a prior art system for damping undesired oscillations in a crane arm;
- Fig. 1B: shows a side view of a crane arm at the end of a horizontal slewing of the crane arm;
- Fig. 2A: shows a schematic, top view of a system for damping undesired oscillations according to the invention, in a first configuration;
- Fig. 2B: shows a schematic, top view of the system shown in Fig. 2A, in a second configuration;
- Fig. 3A: shows a schematic, top view of a system for damping undesired oscillations according to the invention, in a first configuration;
- Fig. 3B: shows a schematic, top view of the system shown in Fig. 3A, in a second configuration;
- Fig. 4A: shows a schematic, top view of a system for damping undesired oscillations according to the invention, wherein the system comprises sensors and a control unit receiving wireless signals from said sensors;
- Fig. 4B: shows a schematic, top view of a system that basically corresponds to the system shown in Fig. 4A. The system, however, comprises sensors and a control unit receiving signals therefrom through wired connections;
- Fig. 5A: shows a schematic, top view of a system for damping undesired oscillations according to the invention, wherein the system comprises sensors and a control unit receiving wireless signals from said sensors;
- Fig. 5B: shows a schematic, top view of a system that basically corresponds to the system shown in Fig. 5A, wherein the system comprises sensors and a control unit receiving signals therefrom through wired connections;
- Fig. 6A: shows two graphs showing the pressure in two hydraulic actuators as function of time in a system according to the invention;
- Fig. 6B: shows two graphs showing the pressure in two hydraulic actuators as function of time in a prior art damping system;
- Fig. 7A: shows a diagram of a system according to the invention;
- Fig. 7B: shows a diagram of a system according to the invention;
- Fig. 7C: shows a diagram of a further system according to the invention.

### Detailed description of the invention

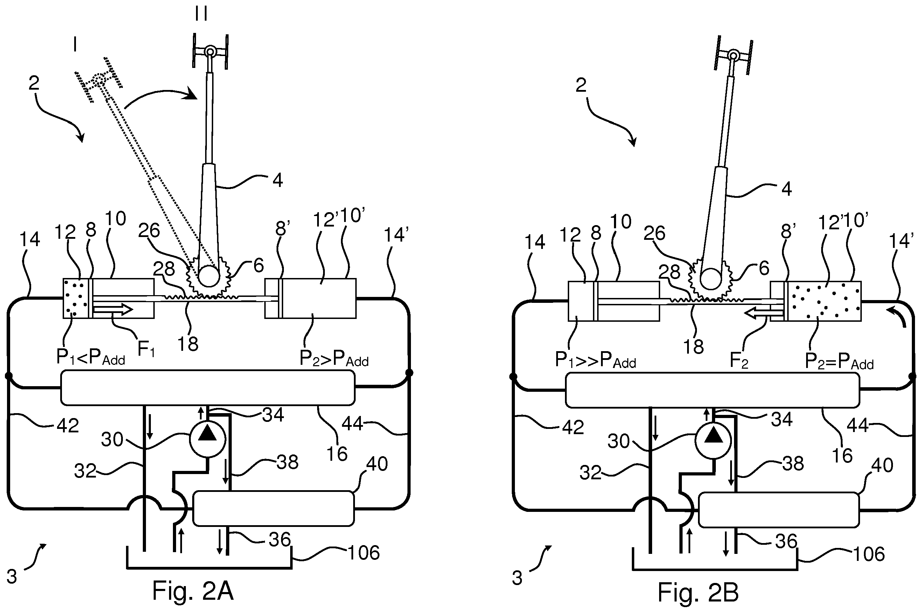

Referring now in detail to the drawings for the purpose of illustrating preferred embodiments of the present invention, a system 2 for damping undesired oscillations of the present invention is illustrated in Fig. 2A.

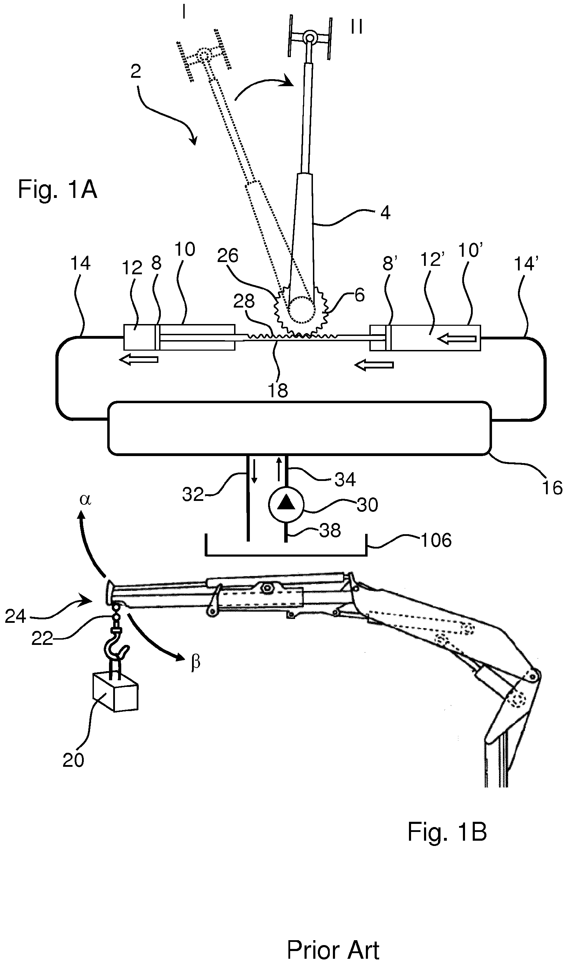

Fig. 1A illustrates a schematic top view of a prior art system 2 for damping undesired oscillations in a crane arm 4. The crane arm 4 is mounted in an arrangement structure having a coaxial gear wheel 6 with teeth 26 engaging a toothed rack 18 having a central toothed portion 26. In each end, the toothed rack 18 is connected to a linear hydraulic actuator (a hydraulic cylinder) 10, 10'. Each hydraulic actuator 10, 10' comprises a piston 8, 8' defining a liquid-filled rear chamber 12, 12'.

These two hydraulic actuators 10, 10' are in fluid communication with a hydraulic unit 16 through a first conduit 14 connected to the first hydraulic actuator 10 and through a second conduit 14' connected to the second hydraulic actuator 10'. The hydraulic unit 16 is connected to a hydraulic pump 30 via a conduit 34 guiding hydraulic oil to the hydraulic unit 16 and to a tank 106 via a conduit 32. The hydraulic unit 16 comprises a directional valve (not shown) configured to direct hydraulic oil from the hydraulic pump 30 to the hydraulic actuators 10, 10' while displaced hydraulic oil flows to a tank 106 via a conduit 32. The hydraulic pump 30 receives hydraulic oil from the tank 106 through the conduit 38.

The hydraulic unit 16 may be provided with a damping member (not shown) capable of redistributing the hydraulic oil in the hydraulic circuit in such a manner that hydraulic oil is directed from the high-pressure side towards the low-pressure side of the arrangement structure. One disadvantage of this solution is that hydraulic clearance (play) is experienced when the crane is started up while the hydraulic oil is cold.

Fig. 1B illustrates a side view of a crane arm 4 at the end of a horizontal slewing of the crane arm 4. The crane arm 4 carries a load 20 that is fixed to an attachment structure 22 formed as a chain fixed to the distal end 24 of the crane arm 4. The distal end (tip) 24 crane arm 4 and the load 20 continues to oscillate along the path shown by the arrows α, β, however, with decreasing amplitude.

Fig. 2A illustrates a schematic, top view of a system 2 for damping undesired oscillations according to the invention while a clockwise rotation of the crane arm 4 is carried out. The system 2 comprises a first hydraulic cylinder 10 having a piston 8 connected to a first end of a connection rack 18 formed as a toothed rack 18 provided with a centrally arranged toothed portion 28. The first hydraulic cylinder 10 comprises a rear chamber 12 filled with hydraulic oil.

The system 2 further comprises a second hydraulic cylinder 10' having a piston 8' connected to a second end of the connection rack 18. The second hydraulic cylinder 10, comprises a rear chamber 12' filled with hydraulic oil. One may consider the first hydraulic cylinder (actuator) 10 and the second hydraulic cylinder (actuator) 10' to constitute a single hydraulic actuator assembly comprising, wherein said hydraulic cylinders 10, 10' are mechanically connected to each other in such a manner that motion of one hydraulic cylinder 10 causes a corresponding motion of another hydraulic cylinder 10'.

The centrally arranged engagement portion 28 of the connection rack 18 engages a corresponding engagement portion 26 (teeth) of a toothed wheel 6 attached to the proximal portion of a crane arm 4. Accordingly, linear displacement of the connection rack 18 will rotate the crane arm 4. As indicated, the displacement of the connection rack 18 to the left will cause the crane arm 4 to rotate clockwise from a first position I (in which the crane arm 4 is dotted) to a second position II, in which the slewing motion is stopped.

The clockwise rotation of the crane arm 4 is accomplished by increasing the pressure P₂ in the rear chamber 12' of the second hydraulic cylinder 10' so that the pressure P2 in the rear chamber 12' exceeds the pressure P₁ in the rear chamber 12 of the first hydraulic cylinder 10. This is done by means of a directional valve (not shown) of the hydraulic unit 16 that is connected to the first hydraulic cylinder 10 by a first conduit 14 and to the second hydraulic cylinder 14' be means of a second conduit 14'. The directional valve of the hydraulic unit 16 is supplied with pressurised hydraulic oil from a hydraulic pump 30 connected to the hydraulic unit 16 by means of a conduit 34. The hydraulic unit 16 is connected to a tank 106 via a conduit 32.

The system 2 comprises a damping member 3 configured to deliver additional hydraulic oil to the first hydraulic cylinder 10 and to the second hydraulic cylinder 10' in order to damp the oscillations referred to with reference to Fig. 1B. The damping member 3 is configured to pre-pressurise the first hydraulic cylinder 10 and to the second hydraulic cylinder 10' in order to increase the "stiffness" of the first hydraulic cylinder 10 and the second hydraulic cylinder 10'. The pre-pressurising process may be started before a slewing process.

The damping member 3 comprises an additional hydraulic unit 40 connected to the hydraulic pump 30 by means of a first conduit 38 delivering pressurised hydraulic oil to a directional valve (not shown) of the hydraulic unit 40. The hydraulic unit 40 is connected to the tank 106 by means of a second conduit 36. The hydraulic unit 40 is connected to the first hydraulic cylinder 10 by means of a conduit 42 and to the second hydraulic cylinder 10' by means of another conduit 44.

As indicated in Fig. 2A, the pressure P₁ in the first hydraulic cylinder 10 is lower than the pressure P_{Add} of the hydraulic oil directed to the rear chamber 12 of the first hydraulic cylinder 10 by means of the hydraulic unit 40. Accordingly, the damping member 3 is capable of increasing the pressure in the rear chamber 12 and hereby effectively introducing a force F₁ onto the piston 8, wherein the force F₁ is directed towards the second hydraulic cylinder 10'. This may be done in order to stabilise the crane arm 4 during the slewing motion. Later on, when the slewing action has been stopped, the damping member 3 is capable of providing a force F₁, that will damp the motion of the piston 8 of the hydraulic cylinder 10 and thus the oscillations referred to with reference to Fig. 1B. Similarly, the damping member 3 is capable of providing a force that will damp the motion of the piston 8' of the other hydraulic cylinder 10' oscillations referred to with reference to Fig. 1B. Moreover, the amplitude of the movements can be reduced.

The damping member 3 preferably comprises a replenishment port for replenishing additional hydraulic oil (e.g. when the crane is to be started up at low temperatures).

In one embodiment according to the invention, the system 2 according to the invention is applied in such a manner that hydraulic oil directed to the rear chamber 12 of the first hydraulic cylinder 10 and/or the rear chamber 12' of the second hydraulic cylinder 10' by means of the hydraulic unit 40, wherein said hydraulic oil is delivered to said first hydraulic cylinder 10 and/or second hydraulic cylinder 10' in the moment, in which the slewing action of a crane arm 4 is stopped.

In another embodiment according to the invention, the system 2 according to the invention is applied in such a manner the hydraulic oil directed to the rear chamber 12 of the first hydraulic cylinder 10 and/or the rear chamber 12' of the second hydraulic cylinder 10' by means of the hydraulic unit 40, wherein said hydraulic oil is delivered to said first hydraulic cylinder 10 and/or second hydraulic cylinder 10' before the end of the slewing action.

Fig. 2B illustrates a schematic, top view of the system 2 shown in Fig. 2A, in a second configuration in which slewing motion has been stopped. The pressure P₁ in the rear chamber 12 of the first hydraulic cylinder 10 is much higher than the pressure P_{Add} delivered by the hydraulic unit 40 because the momentum of the crane arm 4 causes the crane arm 4 to rotate clockwise, whereby the connection rack 18 and thus the piston 8 is pressed to the left causing the pressure P₁ in the rear chamber 12 to increase.

The pressure P₂ in the rear chamber 12' of the second hydraulic cylinder 10' equals pressure P_{Add} delivered by the hydraulic unit 40 because the control valve (not shown) in the hydraulic unit 16 shuts off the hydraulic oil flow towards the second rear chamber 12' of the second hydraulic cylinder 10' when the slewing action is stopped. Accordingly, the hydraulic unit 40 will damp the piston 8' of the second hydraulic cylinder 10' by providing a force F2 towards the first hydraulic cylinder 10 later on when the motion of the connection rack 18 is reversed (moves from the left to the right).

In one embodiment according to the invention the pressure P_{Add} delivered by the hydraulic unit 40 is kept constant during the damping of the oscillations. The pressure P_{Add} delivered by the hydraulic unit 40 may be 10 bar, 20 bar, 30 bar, 40 bar, 50 bar, 60 bar, 70 bar, 80 bar, 90 bar, 100 bar, 110 bar, 120 bar, 130 bar, 140 bar, 150 bar, 160 bar, 170 bar, 180 bar, 190 bar, 200 bar, 210 bar, 220 bar, 230 bar or higher.

In one embodiment according to the invention the pressure P_{Add} delivered by the hydraulic unit 40 is varied as function of time during the damping of the oscillations. The pressure P_{Add} delivered by the hydraulic unit 40 may be varied according to a predefined pressure curve or be varied on the basis of one or more parameters detected by means of one or more sensors.

In one embodiment according to the invention the pressure P_{add} delivered by the hydraulic unit 40 may be selected to be so high that the piston 8 in the rear chamber 12 of the first hydraulic cylinder 10 is being damped by introducing a force F₁ caused by introduction of the high pressure P_{Add} delivered by the hydraulic unit 40 at the moment the slewing action is stopped.

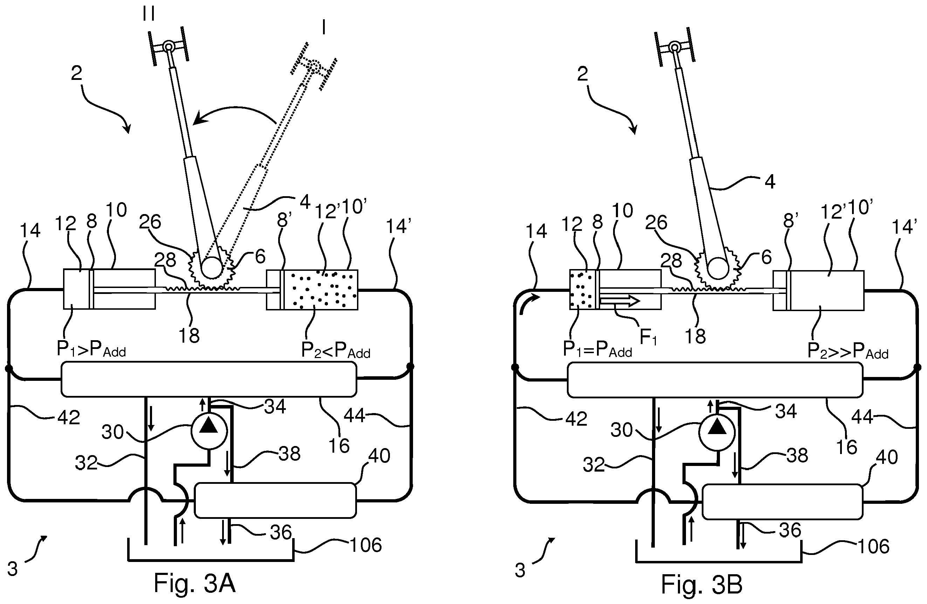

Fig. 3A illustrates a schematic, top view of a system 2 for damping undesired oscillations according to the invention. The system 2 corresponds to the system 2 shown in Fig. 2, however, the crane arm 4 is rotated anticlockwise from a first position I (wherein the crane arm 4 is indicated with dotted lines) to a second position II (wherein the crane arm 4 is drawn with solid lines). Fig. 3A illustrates the system 2 the moment before the slewing action is stopped.

The pressure P₁ in the rear chamber 12 of the first hydraulic cylinder 10 is higher than the pressure P_{Add} delivered by the hydraulic unit 40 as a higher pressure P₁ is used to rotate the crane arm 4. Accordingly, the hydraulic unit 40 cannot increase the pressure in the rear chamber 12 of the first hydraulic cylinder 10 as long as the pressure P_{Add} delivered by the hydraulic unit 40 is maintained in this level. In one embodiment according to the invention, however, the pressure P_{Add} delivered by the hydraulic unit 40 may be increased if desired.

The pressure P₂ in the rear chamber 12' of the second hydraulic cylinder 10' is lower than the pressure P_{Add} delivered by the hydraulic unit 40 during the slewing motion. Accordingly, the hydraulic unit 40 is capable of increasing the pressure in the rear chamber 12' during the slewing motion.

Fig. 3B illustrates a schematic, top view of the system 2 shown in Fig. 3A. Fig. 3B shows a situation that occurs in a short time period after the situation shown in Fig. 3A. The momentum of the crane arm 4 will move the connection rack 18 from the left to the right hereby increasing the pressure P2 to be higher than the pressure P_{Add} delivered by the hydraulic unit 40 because the control valve (not shown) in the hydraulic unit 16 shuts off the hydraulic oil flow towards the first rear chamber 12 of the first hydraulic cylinder 10 when the slewing action is stopped.

The damping member 3 of the system 2 illustrated in Fig. 3A and in Fig. 3B can damp undesired oscillations in a movably arranged crane structure such as a crane arm 4 being hydraulically driven by adding hydraulic oil alternatingly to the two hydraulic actuators 10, 10'.

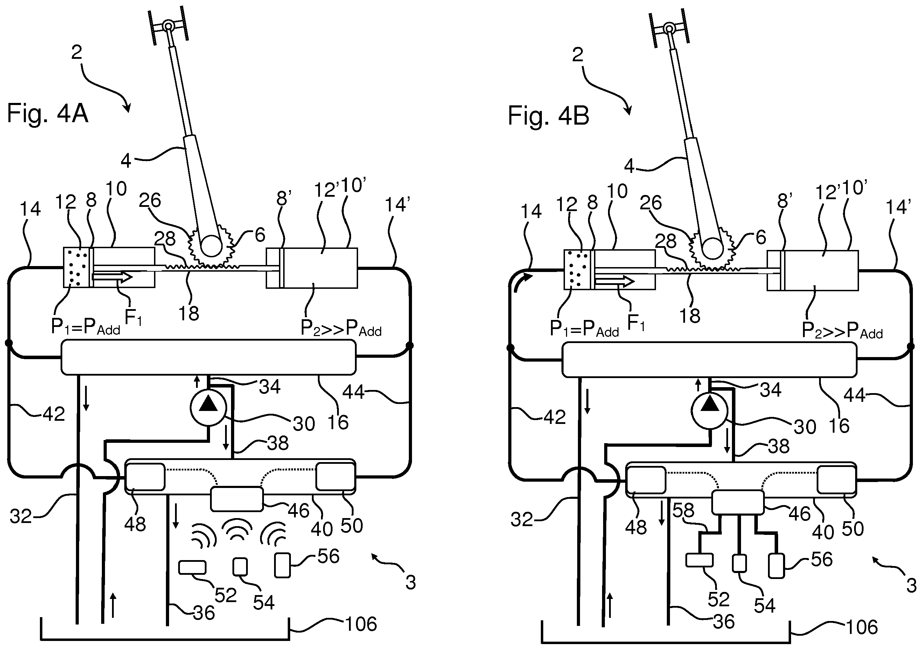

Fig. 4A illustrates a schematic, top view of a system 2 for damping undesired oscillations according to the invention. The system 2 comprises the same elements as the system shown in Fig. 3B. The system additionally comprises a number of sensors 52, 54, 56 configured to monitor one or more parameters including the inclination of a crane, the position and or (linear or angular) velocity of the crane arm 4, the length of a crane arm 4 (e.g. measured as the distance from the tip of the crane arm 4 to the proximal end (in which the crane arm 4 is rotatably mounted e.g. to a truck, one or more pressures, temperature (e.g. temperature of the hydraulic oil). The system 2 may comprise a single sensor 52 or a plurality of sensors 52, 54, 56 as the one shown in Fig. 4A.

The damping member 3 of the system 2 additionally comprises a control unit 46 configured to receiving wireless signals from the sensors 52, 54, 56. The system 2 moreover comprises a first control valve 48 connected to the conduit 42 configured to deliver hydraulic oil to the first hydraulic cylinder 10 and a second control valve 50 configured to deliver hydraulic oil to the second hydraulic cylinder 10. The control unit 46 is connected to the control valves 48, 50 and is configured to control the flow passing through these. In one embodiment according to the invention, the control unit 46 comprises a single control valve configured to control the delivery of hydraulic oil to the first hydraulic cylinder 10 and to the second hydraulic cylinder 10.

In a preferred embodiment of the invention the damping member 3 is configured to at least partly control the control valves 48, 50 (or by a single control valve) on the basis of one or more parameters provided by means of the sensors 52, 54, 56. Other parameters including parameters that can be manually set (e.g. by means of a remote control) can also at least partly be used to control the control valves 48, 50. The control unit 46 is electrically connected to the control valves 48, 50 by means of cables (indicated with dotted lines). However, in another embodiment according to the invention the control unit 46 may be wirelessly connected to the control valves 48, 50.

The use of a control unit 46 that includes measured parameters can provide a more intelligent and faster damping of a crane structure such as a crane arm 4 than the prior art damping systems.

Fig. 4B illustrates a schematic, top view of a system 2 that basically corresponds to the system shown in Fig. 4A. The system, however, comprises sensors 52, 54, 56 and a control unit 46 that receives the sensor signals via cables 58.

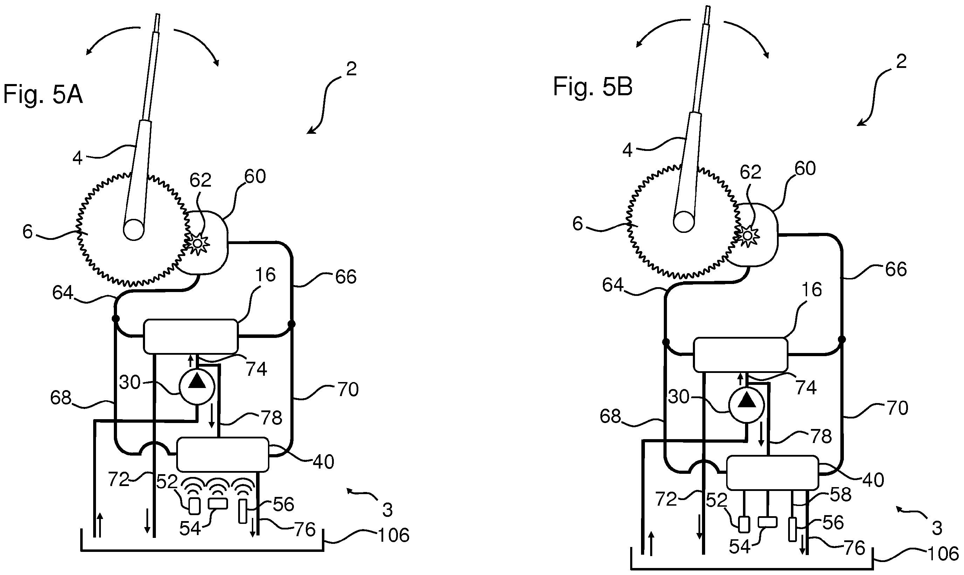

Fig. 5A illustrates a schematic, top view of a system 2 for damping undesired oscillations according to the invention. The system 2 comprises sensors 52, 54, 56 and a control unit 46 receiving wireless signals from said sensors 52, 54, 56. The system 2 comprises a hydraulic motor 60 driving a toothed wheel (also referred to as a gear wheel) 62 brought into engagement with corresponding engagement portion (teeth) of a toothed wheel 6 attached to the proximal portion of a crane arm 4. Accordingly, activation of the hydraulic motor 60 will rotate the crane arm 4.

The system comprises a hydraulic unit 16 hydraulically connected to a hydraulic pump 30 by means of a first conduit 74 and a tank 106 by another conduit 72. The hydraulic unit 16 is hydraulically connected to a first port of the hydraulic motor 60 via a first conduit 64 and to a second port of the hydraulic motor 60 via a second conduit 66.

The system 2 comprises a damping member 3 configured to deliver additional hydraulic oil to the hydraulic motor 60 in order to damp the oscillations referred to with reference to Fig. 1B. The damping member 3 may preferably be configured to pre-pressurise the hydraulic motor 60 in order to increase the "stiffness" of the arrangement responsible to rotate the crane arm 4.

The damping member 3 comprises an additional hydraulic unit 40 connected to the hydraulic pump 30 by means of a first conduit 78 delivering pressurised hydraulic oil to a directional valve (not shown) of the hydraulic unit 40. The hydraulic unit 40 is connected to the tank 106 through a second conduit 76. The hydraulic unit 40 is connected to a first port of the hydraulic motor 60 by means of a conduit 68 and to a second port of the hydraulic motor 60 by means of another conduit 70.

Accordingly, the damping member 3 is capable of increasing the pressure in the low-pressure port of the hydraulic motor 60 and hereby effectively reducing the speed of the hydraulic motor 60 even when the crane arm 4 keeps on moving after the hydraulic motor has been shut off (set in neutral position). Accordingly, the oscillations referred to with reference to Fig. 1B as well as amplitude of the movements can be reduced. The damping member 3 preferably comprises a replenishment port for replenishing additional hydraulic oil.

The system additionally comprises a number of sensors 52, 54, 56 configured to monitor one or more parameters including the inclination of a crane, the position and or (linear or angular) velocity of the crane arm 4, the length of a crane arm 4 (e.g. measured as the distance from the tip of the crane arm 4 to the proximal end (in which the crane arm 4 is rotatably mounted e.g. to a truck, one or more pressures, temperature (e.g. temperature of the hydraulic oil). The system 2 may comprise a single sensor 52 or a plurality of sensors 52, 54, 56.

The additional hydraulic unit 40 of the damping member 3 preferably comprises a control unit as illustrated in Fig. 4A, wherein the control unit is configured to receive wireless signals from the sensors 52, 54, 56. The damping member 3 preferably comprises one or more control valves configured to deliver hydraulic oil to and/or receive hydraulic oil from the hydraulic motor 60.

The control unit (not shown) may preferably be connected to the one or more control valves and be configured to control the flow passing through said control valve(s).

The damping member 3 is configured to at least partly control the one or more control valves on the basis of one or more parameters provided by means of the sensors 52, 54, 56. Other parameters including parameters that can be manually set (e.g. by means of a remote control) can also at least partly be used to control the one or more control valves. The control unit may be electrically connected to the one or more control valves by means of cables or alternatively be wirelessly connected to the one or more control valves.
Fig. 5B illustrates a schematic, top view of a system 2 that basically corresponds to the system 2 shown in Fig. 5A. The system, however, comprises sensors 52, 54, 56 connected to the additional hydraulic unit 40 via cables 58.

Fig. 6A illustrates two graphs 80, 82 showing the pressure 86 in two hydraulic actuators as function of time 84 in a system according to the invention, whereas Fig. 6B illustrates two graphs 80', 82' showing the pressure 86 in two hydraulic actuators as function of time 84 in a prior art damping system. The sequence shown in Fig. 6A corresponds to pressure measurements made in two hydraulic cylinders in a setup as shown in Fig. 2A, Fig. 2B, Fig. 3A, Fig. 3B, Fig. 4A and Fig. 4B. The sequence shown in Fig. 6B, however, corresponds to pressure measurements made in two hydraulic cylinders in a setup as shown in Fig. 6B.

It can be seen, that the pressure 86 alternatingly changes between high and low levels, however with decreasing amplitude, until the crane structure (crane arm) and the load carried by it is stopped completely. When the hydraulic cylinders (see Fig. 2-4) are stopped, the pressure P2 in the hydraulic cylinders are 0 as indicated by the arrow in Fig. 6B. In Fig. 6A, however, the pressure starts out at a higher level, wherein P2 equals P_{Add} (as explained with reference to Fig. 2A and Fig. 2B). Accordingly, the system has an improved ability to damp the oscillation of the crane structure and the load carried by it. At the slewing action which occurs between the time T₀ and T₁ (indicated with an arrow in Fig. 6A), the pressure measurements in Fig. 6A corresponds to the one shown in Fig. 6B. When the slewing action, however, is stopped, the crane structure and the load carried by it continues to oscillate and the damping ability of the system determines the amplitude of the movements as well as the oscillation time. In Fig. 6A, it can be seen, that the hydraulic cylinder having the lowest pressure (the pressure is indicated with a solid line) is pre-pressurised with hydraulic oil from the damping system according to the invention after T₁ (indicated by the arrow in Fig. 6A).

At Fig. 6B, the pressure in the hydraulic cylinder having the lowest pressure (the pressure is indicated with a solid line) takes a corresponding value after one additional second. Accordingly, the system having a damping member according to the invention starts damping at once, whereas the prior art system needs time to build-up the pressure (which is delivered instantaneously in the system according of the invention).

When comparing Fig. 6A and Fig. 6B one can see that the system according to the invention reduces the amplitudes of the movements and reduces the oscillation time. The oscillation time D₁ between time T₁ and time T₂ is smaller than the oscillation time D2 between time T₁ and time T₃ of the prior art system. Furthermore, the hydraulic cylinders are eventually pressurized to a higher pressure P₄ in the system according to the invention shown in Fig. 6A than the pressure P3 of the hydraulic cylinders in the prior art system shown in Fig. 6B. This means that the system according to the invention will have a higher stiffness (higher initially pressure level in the hydraulic cylinders) when the next operation starts.

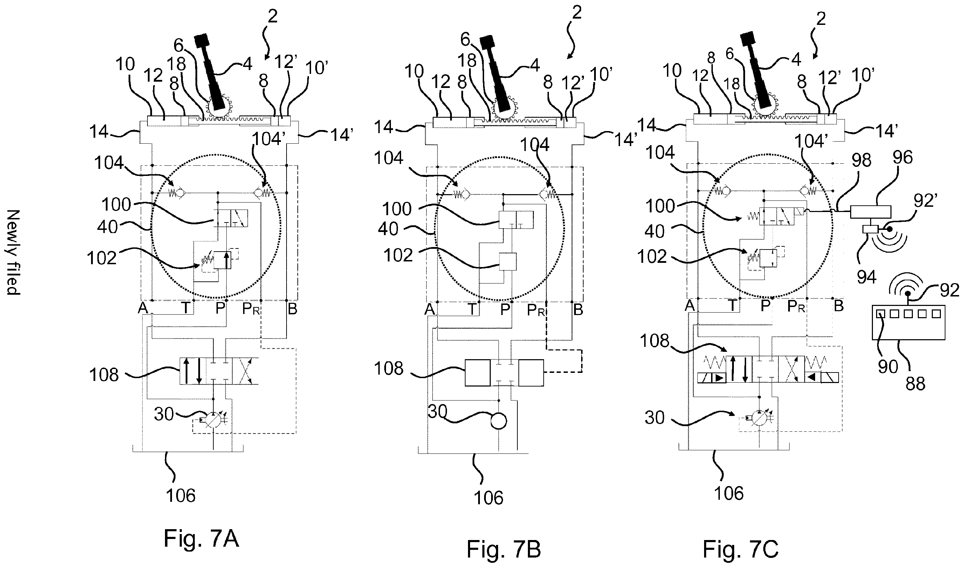

Fig. 7A illustrates a hydraulic diagram of a system 2 according to the invention. The system 2 comprises a slewing arrangement corresponding to the one shown in the system explained with reference to Fig. 2A, Fig. 2B, Fig. 3A, Fig. 3B, Fig. 4A and Fig. 4B. The slewing arrangement comprises a first hydraulic cylinder 10 having a piston 8 connected to a first end of a connection rack 18 formed as a toothed rack 18 provided with a centrally arranged toothed portion (provided with teeth). The first hydraulic cylinder 10 comprises a rear chamber 12 filled with hydraulic oil.

The system 2 further comprises a second hydraulic cylinder 10' having a piston 8' connected to a second end of the connection rack 18. The second hydraulic cylinder 10, comprises a rear chamber 12' filled with hydraulic oil.

The centrally arranged engagement portion of the connection rack 18 engages a corresponding engagement portion (teeth) of a toothed wheel 6 attached to the proximal portion of a crane arm 4. Accordingly, linear displacement of the connection rack 18 will rotate the crane arm 4. As indicated, the displacement of the connection rack 18 will cause the crane arm 4 to rotate.

The system 2 comprises a hydraulic pump 30 connected to a hydraulic oil tank 106. The hydraulic pump 30 is configured to pressurise hydraulic oil received from the hydraulic oil tank 106 and deliver the pressurised hydraulic oil via a conduit to the point P.

The hydraulic pump 30 is further hydraulically connected to a directional valve 108 having a port connected to the tank 106. The directional valve 108 is connected to the point A being connected to the first hydraulic cylinder 10 and to the point B being connected to the second hydraulic cylinder 10'.

The system 2 comprises an additional hydraulic unit 40 comprising a pressure reducing valve 102 connected to the tank 106 and to the pressurised point P. The system 2 comprises a control valve 100 connected to the pressure reducing valve 102, a point T (connected to the tank 106) a conduit extending between two opposite directed non-return valves 104, 104'.

The control valve 100 delivers a pressure being reduced relative to the pressure delivered by the hydraulic pump 30, in a pressure point P_{R}.

The control valve 100 of the hydraulic unit 40 can via these hydraulic connections supply hydraulic oil to the hydraulic cylinders 10, 10'.

Fig. 7B illustrates a diagram of a system 2 according to the invention. The system 2 basically comprises the same components as the system shown in Fig. 7A. The hydraulic pump 30, the directional valve 108, the control valve 100 and the pressure reducing valve 102 are symbolised in a more general way. Accordingly, these hydraulic components may be of any suitable type and may be controlled in any suitable way. The pressure point P_{R} is connected to the directional valve 108.

Fig. 7C illustrates a diagram of a preferred system 2 according to the invention. The system basically corresponds to the one shown in Fig. 7A and in Fig. 7B, however, the control valve 100 is connected to a control member 96 via an electric cable 98. The control member 96 comprises a receiver unit 94 provided with an antenna 92' configured to receive wireless signals.

The system comprises a remote control 88 provided with a plurality of levers 90 for selecting an operating function of a crane arm of a crane. One of the levers 90 is predefined to do a horizontal slewing of the crane arm 4. When the remote control 88 is applied to stop the horizontal slewing of the crane arm (by returning the lever 90 to neutral), the remote control 88 will generate and transmit a wireless control signal to the receiver unit 94. The control member 96 will generate an activation signal (based on the control signal received by the receiver unit 94) and transmit it to the control valve 100 via the cable 98.

However, in an alternative embodiment according to the invention, the remote control 88 may be connected to the control member 96 by means of a cable. In an even further embodiment according to the invention the control function may be provided by a handle mechanically connected to the control valve 108.

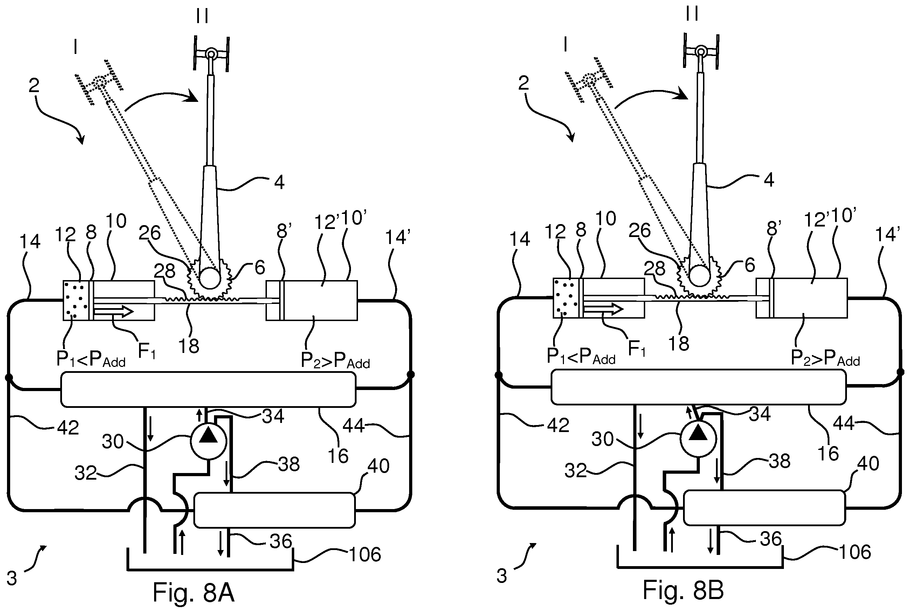

Fig. 8A illustrates a schematic, top view of a system 2 for damping undesired oscillations according to the invention, in a first configuration. The system 2 basically corresponds to the system shown in Fig. 2A. The hydraulic unit 16 is connected to the pump 30 by means of a conduit 34, whereas the additional hydraulic unit 40 is connected to the pump 30 via another conduit 38. The two conduits 34, 38 are connected to two separate structures (e.g. different outlets of the pump 30).

Fig. 8B illustrates a schematic, top view of another system 2 for damping undesired oscillations according to the invention, in a first configuration. The system 2 basically corresponds to the system shown in Fig. 2A. The hydraulic unit 16, however, is connected to the pump 30 via a first conduit 34, whereas the additional hydraulic unit 40 is connected to the pump 30 by means of a second conduit 38. This means that the pump 30 can deliver pressurised fluid to the hydraulic unit 16 and to the additional hydraulic unit 40. Accordingly, the system 2 allows for providing fluid to the hydraulic cylinders 10, 10' independently of each other by means of the two hydraulic units 16, 40.

Accordingly, the additional hydraulic unit 40 is configured to deliver an additional hydraulic oil flow independently of the oil flow delivered by the hydraulic unit 16. Thus, the additional hydraulic unit 40 can damp the motion of the at least hydraulic actuators 10, 10'.

### List of reference numerals

- 2: System for damping undesired oscillations
- 3: Damping member
- 4: Crane structure
- 6: Engagement structure
- 8, 8': Piston
- 10: First hydraulic cylinder
- 10': Second hydraulic cylinder
- 12, 12': Rear chamber
- 14: First conduit
- 14': Second conduit
- 16: Hydraulic unit
- 18: Connection rack
- 20: Load
- 22: Attachment structure
- 24: Distal end of the crane structure
- 26, 28: Engagement portion
- 30: Hydraulic pump
- 32, 34, 36, 38: Conduit
- 40: Additional hydraulic unit
- 42, 44: Conduit
- 46: Control unit
- 48, 50: Proportional valve
- 52, 54, 56: Sensor
- 58: Cable
- 60: Hydraulic motor
- 62: Gear wheel
- 64, 66, 68, 70: Conduit
- 72, 74, 76, 78: Conduit
- 80, 80', 82, 82': Graph
- 84: Time
- 86: Pressure
- 88: Remote control
- 90: Lever
- 92, 92': Antenna
- 94: Receiver unit
- 96: Control member
- 98: Cable
- 100: Control valve
- 102: Pressure reducing valve
- 104, 104': Non-return valve
- 106: Hydraulic oil tank
- 108: Valve
- P: Point
- P₁, P₂, P₃, P₄: Pressure
- T: Tank
- T₀, T₁, T₂, T₃: Time
- A, B: Hydraulic point
- P_{Add}: Additional pressure
- P_{R}: Reduced pressure
- F, F₁, F₂: Force
- D₁, D₂: Duration
- α, β: Path
- I, II: Position

## Claims

1. A system (2) for damping undesired oscillations in a movably arranged crane structure (4) being hydraulically driven by means of an arrangement comprising at least one hydraulic actuator (10, 10', 60) mechanically connected to an engagement structure (6) attached to the crane structure (4), wherein the at least one hydraulic actuator (10, 10', 60) is in fluid communication with a hydraulic unit (16) through one or more conduits (14, 14', 64, 66), wherein said hydraulic unit (16) is connected to a hydraulic pressure source (30), wherein the hydraulic unit (16) comprises a valve (108) configured to direct hydraulic oil from the hydraulic pressure source (30), to the at least one hydraulic actuator (10, 10', 60), **characterised in that** the system (2) comprises a damping member (3) comprising an additional hydraulic unit (40) hydraulically connected to the hydraulic pressure source (30) and to the at least one hydraulic actuator (10, 10', 60), where the additional hydraulic unit (40) is connected to the hydraulic pressure source (30) via a conduit (38, 74) arranged in such a manner that the additional hydraulic oil flow can be delivered to the additional hydraulic unit (40) by the hydraulic pressure source (30) without flowing through the hydraulic unit (16), whereby the additional hydraulic unit (40) is configured to deliver an additional hydraulic oil flow and hereby damp the motion of the at least one hydraulic actuator (10, 10', 60).

2. A system (2) according to claim 1, **characterised in that** the crane structure (4) being hydraulically driven by means of an arrangement comprising:
- a first hydraulic actuator (10) having a piston (8) connected to a first end of a connection rack (18);
- a second hydraulic actuator (10') having a piston (8') connected to a second end of the connection rack (18), wherein said connection rack (18) comprises an engagement portion (28) engaging a corresponding engagement portion (26) of an engagement structure (6) attached to the crane structure (4), wherein the damping member (3) is configured to provide an increased pressure causing an increased force (F) onto at least one of the pistons (8, 8'), said force (F) being directed toward the other piston (8', 8).

3. A system (2) according to claim 1, **characterised in that** the crane structure (4) being hydraulically driven by means of an arrangement comprising a hydraulic motor (60) mechanically connected to a gear wheel (62) brought into engagement with corresponding engagement portion (teeth) of a toothed wheel (6) attached to the crane structure (4).

4. A system (2) according to claim 1 or claim 2, **characterised in that** the hydraulic actuators (10, 10') comprise a liquid-filled rear chamber (12, 12') and that the damping member (3) comprises or is connected to a hydraulic pressure source (30) being in fluid communication with the rear chamber (12, 12') of at least one of the hydraulic actuators (10, 10'), preferably both hydraulic actuators (10, 10').

5. A system (2) according to claim 2, **characterised in that** the hydraulic pressure source (30) is a hydraulic pressure source of the crane.

6. A system (2) according to one of the previous claims, **characterised in that** the damping member (3) comprises a pressure reducing valve (102) and a control valve (100).

7. A system (2) according to one of the preceding claims, **characterised in that** the system (2) comprises a control unit (46) configured to control the pressure (P_{R}) provided by the additional hydraulic unit (40) in dependency of one or more parameters being either predefined and/or being monitored by one or more sensors (52, 54, 56).

8. A system (2) according to claim 7, **characterised in that** the control unit (46) is configured to control the pressure (P_{R}) provided by the additional hydraulic unit (40) in such a manner that the pressure (P_{R}) varies as function of time.

9. A system (2) according to one of the preceding claims, **characterised in that** the system (2) comprises one or more sensors (52, 54, 56) for detecting one or more parameters, wherein the one or more sensors (52, 54, 56) include one or more of the following sensors (52, 54, 56): an inclination sensor, a sensor configured to monitor either linear position and/or linear velocity and/or angular position and/or angular velocity, a temperature sensor, a pressure sensor, a flow sensor or a sensor for detecting the distance between the point in which a load is fixed to a crane arm (4) and a position of the load (20) or for detecting the distance between the load (20) and the point about which the crane arm (4) is rotated.

10. A system (2) according to one of the preceding claims, **characterised in that** the system (2) comprises one or more replenishment ports for replenishing hydraulic oil to the hydraulic actuator(s) (10, 10', 60).

11. A method for damping undesired oscillations in a movably arranged crane structure (4) being hydraulically driven by means of an arrangement comprising at least one hydraulic actuator (10, 10', 60) mechanically connected to an engagement structure (6) attached to the crane structure (4), wherein the hydraulic actuator (10, 10',60) is in fluid communication with a hydraulic unit (16) through one or more conduits (14, 14', 64, 66), wherein said hydraulic unit (16) is connected to a hydraulic pressure source (30), wherein the hydraulic unit (16) comprises a valve (108) configured to direct hydraulic oil from the hydraulic pressure source (30), to the hydraulic actuator (10,10', 60), **characterised in that** the method comprises the step of damping the motion of the hydraulic actuator assembly by means of a damping member (3) comprising an additional hydraulic unit (40) hydraulically connected to a hydraulic pressure source (30) and to the hydraulic actuator (10, 10', 60), by delivering an additional hydraulic oil flow and hereby damping the motion of the hydraulic actuator (10, 10', 60) by means of the additional hydraulic unit (40), where the additional hydraulic unit (40) is connected to the hydraulic pressure source (30) via a conduit (38, 74) arranged in such a manner that the additional hydraulic oil flow can be delivered to the additional hydraulic unit (40) by the hydraulic pressure source (30) without flowing through the hydraulic unit (16).

12. A method according to claim 11, **characterised in that** the crane structure (4) is being hydraulically driven by means of an arrangement comprising:
- a first hydraulic cylinder (10) having a piston (8) connected to a first end of a connection rack (18);
- a second hydraulic cylinder (10') having a piston (8') connected to a second end of the connection rack (18), wherein said connection rack (18) comprises an engagement portion (28) engaging a corresponding engagement portion (26) of an engagement structure (6) attached to the crane structure (4), wherein the method comprises the following step:
- providing an increased pressure causing an increased force (F) onto one of the pistons (8, 8'), said force (F) being directed toward the other piston (8', 8).

13. A method according to claim 11 or 12, **characterised in that** the crane structure (4) is hydraulically driven by means of an arrangement comprising a hydraulic motor (60) mechanically connected to a gear wheel (62) brought into engagement with corresponding engagement portion (teeth) of a toothed wheel (6) attached to the crane structure (4), wherein the method comprises the step of by delivering an additional hydraulic oil flow and hereby damping the motion of the at least one hydraulic motor (60) by means of the additional hydraulic unit (40).

14. A method according to one of the preceding claims 11-13, **characterised in that** the method comprises the step of applying a control unit (46) configured to control the pressure (P_{R}) provided by the additional hydraulic unit (40) in dependency of one or more parameters being either predefined (set by using a control unit) and/or being monitored by one or more sensors (52, 54, 56).

15. A crane comprising a system according to one of the claims 1-10.

## Patentansprüche

1. System (2) zum Dämpfen unerwünschter Schwingungen in einer bewegbar angeordneten Kranstruktur (4), die durch eine Anordnung hydraulisch angetrieben wird, die mindestens einen hydraulischen Aktuator (10, 10', 60) umfasst, der mechanisch mit einer Eingriffsstruktur (6) verbunden ist, die an der Kranstruktur (4) angebracht ist, wobei der mindestens eine hydraulische Aktuator (10, 10', 60) mit einer Hydraulikeinheit (16) durch eine oder mehrere Leitungen (14, 14', 64, 66) in Fluidverbindung steht, wobei die Hydraulikeinheit (16) mit einer Hydraulikdruckquelle (30) verbunden ist, wobei die Hydraulikeinheit (16) ein Ventil (108) umfasst, das konfiguriert ist, Hydrauliköl von der Hydraulikdruckquelle (30) zu dem mindestens einen hydraulischen Aktuator (10, 10', 60) zu leiten, **dadurch gekennzeichnet, dass** das System (2) ein Dämpfungselement (3) umfasst, das eine zusätzliche Hydraulikeinheit (40) umfasst, die hydraulisch mit der Hydraulikdruckquelle (30) und mit dem mindestens einen hydraulischen Aktuator (10, 10', 60) verbunden ist, wobei die zusätzliche Hydraulikeinheit (40) über eine Leitung (38, 74) mit der Hydraulikdruckquelle (30) verbunden ist, die so angeordnet ist, dass der zusätzliche Hydraulikölfluss der zusätzlichen Hydraulikeinheit (40) durch die Hydraulikdruckquelle (30) zugeführt werden kann, ohne durch die Hydraulikeinheit (16) zu fließen, wodurch die zusätzliche Hydraulikeinheit (40) konfiguriert ist, einen zusätzlichen Hydraulikölfluss zuzuführen und dadurch die Bewegung von dem mindestens einen hydraulischen Aktuator (10, 10', 60) zu dämpfen.

2. System (2) nach Anspruch 1, **dadurch gekennzeichnet, dass** die Kranstruktur (4) hydraulisch durch eine Anordnung angetrieben wird, die Folgendes umfasst:
- einen ersten hydraulischen Aktuator (10), der einen Kolben (8) aufweist, der mit einem ersten Ende eines Verbindungsträgers (18) verbunden ist;
- einen zweiten hydraulischen Aktuator (10'), der einen Kolben (8') aufweist, der mit einem zweiten Ende des Verbindungsträgers (18) verbunden ist, wobei der Verbindungsträger (18) einen Eingriffsabschnitt (28) umfasst, der mit einem entsprechenden Eingriffsabschnitt (26) einer Eingriffsstruktur (6), die an der Kranstruktur (4) angebracht ist, in Eingriff steht, wobei das Dämpfungselement (3) konfiguriert ist, einen erhöhten Druck bereitzustellen, der eine erhöhte Kraft (F) auf mindestens einen der Kolben (8, 8') verursacht, wobei die Kraft (F) in Richtung des anderen Kolbens (8', 8) gerichtet ist.

3. System (2) nach Anspruch 1, **dadurch gekennzeichnet, dass** die Kranstruktur (4) hydraulisch durch eine Anordnung angetrieben wird, die einen Hydraulikmotor (60) umfasst, der mechanisch mit einem Getrieberad (62) verbunden ist, das mit entsprechendem Eingriffsabschnitt (Zähnen) eines Zahnrads (6) in Eingriff gebracht wird, das an der Kranstruktur (4) angebracht ist.

4. System (2) nach Anspruch 1 oder Anspruch 2, **dadurch gekennzeichnet, dass** die hydraulischen Aktuatoren (10, 10') eine flüssigkeitsgefüllte hintere Kammer (12, 12') umfassen und das Dämpfungselement (3) eine Hydraulikdruckquelle (30), die mit der hinteren Kammer (12, 12') von mindestens einem der hydraulischen Aktuatoren (10, 10'), bevorzugt beiden hydraulischen Aktuatoren (10, 10'), in Fluidverbindung steht, umfasst oder damit verbunden ist.

5. System (2) nach Anspruch 2, **dadurch gekennzeichnet, dass** die Hydraulikdruckquelle (30) eine Hydraulikdruckquelle des Krans ist.

6. System (2) nach einem der vorhergehenden Ansprüche, **dadurch gekennzeichnet, dass** das Dämpfungselement (3) ein Druckminderventil (102) und ein Steuerventil (100) umfasst.

7. System (2) nach einem der vorstehenden Ansprüche, **dadurch gekennzeichnet, dass** das System (2) eine Steuereinheit (46) umfasst, die konfiguriert ist, den Druck (P_{R}), der von der zusätzlichen Hydraulikeinheit (40) bereitgestellt wird, abhängig von einem oder mehreren Parametern zu steuern, die entweder vordefiniert und/oder von einem oder mehreren Sensoren (52, 54, 56) überwacht werden.

8. System (2) nach Anspruch 7, **dadurch gekennzeichnet, dass** die Steuereinheit (46) konfiguriert ist, den Druck (P_{R}), der durch die zusätzliche Hydraulikeinheit (40) bereitgestellt wird, so zu steuern, dass der Druck (P_{R}) als Funktion der Zeit variiert.

9. System (2) nach einem der vorstehenden Ansprüche, **dadurch gekennzeichnet, dass** das System (2) einen oder mehrere Sensoren (52, 54, 56) zum Erfassen von einem oder mehreren Parametern umfasst, wobei der eine oder die mehreren Sensoren (52, 54, 56) einen oder mehrere der folgenden Sensoren (52, 54, 56) umfassen: einen Neigungssensor, einen Sensor, der konfiguriert ist, entweder eine lineare Position und/oder lineare Geschwindigkeit und/oder Winkelstellung und/oder Winkelgeschwindigkeit zu überwachen, einen Temperatursensor, einen Drucksensor, einen Durchflusssensor oder einen Sensor zum Erfassen des Abstands zwischen dem Punkt, an dem eine Last an dem Kranarm (4) angebracht ist, und einer Position der Last (20) oder zum Erfassen des Abstands zwischen der Last (20) und dem Punkt, um den der Kranarm (4) gedreht wird.

10. System (2) nach einem der vorstehenden Ansprüche, **dadurch gekennzeichnet, dass** das System (2) einen oder mehrere Auffüllanschlüsse zum Auffüllen von Hydrauliköl für den/die hydraulischen Aktuator(en) (10, 10', 60) umfasst.

11. Verfahren zum Dämpfen unerwünschter Schwingungen in einer bewegbar angeordneten Kranstruktur (4), die hydraulisch durch eine Anordnung angetrieben wird, die mindestens einen hydraulischen Aktuator (10, 10', 60) umfasst, der mechanisch mit einer Eingriffsstruktur (6) verbunden ist, die an die Kranstruktur (4) angebracht ist, wobei der hydraulische Aktuator (10, 10', 60) mit einer Hydraulikeinheit (16) durch eine oder mehrere Leitungen (14, 14', 64, 66) in Fluidverbindung steht, wobei die Hydraulikeinheit (16) mit einer Hydraulikdruckquelle (30) verbunden ist, wobei die Hydraulikeinheit (16) ein Ventil (108) umfasst, das konfiguriert ist, Hydrauliköl von der Hydraulikdruckquelle (30) zu dem hydraulischen Aktuator (10, 10', 60) zu leiten, **dadurch gekennzeichnet, dass** das Verfahren den Schritt des Dämpfens der Bewegung der hydraulischen Aktuatoranordnung durch ein Dämpfungselement (3), das eine zusätzliche Hydraulikeinheit (40) umfasst, die hydraulisch mit einer Hydraulikdruckquelle (30) und mit dem hydraulischen Aktuator (10, 10', 60) verbunden ist, durch Zuführen eines zusätzlichen Hydraulikölflusses und dadurch Dämpfen der Bewegung des hydraulischen Aktuators (10, 10', 60) durch die zusätzliche Hydraulikeinheit (40) umfasst, wobei die zusätzliche Hydraulikeinheit (40) mit der Hydraulikdruckquelle (30) über eine Leitung (38, 74) verbunden ist, die so angeordnet ist, dass der zusätzliche Hydraulikölfluss der zusätzlichen Hydraulikeinheit (40) durch die Hydraulikquelle (30) zugeführt werden kann, ohne durch die Hydraulikeinheit (16) zu fließen.

12. Verfahren nach Anspruch 11, **dadurch gekennzeichnet, dass** die Kranstruktur (4) hydraulisch durch eine Anordnung angetrieben wird, die Folgendes umfasst:
- einen ersten Hydraulikzylinder (10), der einen Kolben (8) aufweist, der mit einem ersten Ende eines Verbindungsträgers (18) verbunden ist;
- einen zweiten Hydraulikzylinder (10'), der einen Kolben (8') aufweist, der mit einem zweiten Ende des Verbindungsträgers (18) verbunden ist, wobei der Verbindungsträger (18) einen Eingriffsabschnitt (28) umfasst, der mit einem entsprechenden Eingriffsabschnitt (26) einer Eingriffsstruktur (6) in Eingriff steht, die an der Kranstruktur (4) angebracht ist, wobei das Verfahren den folgenden Schritt umfasst:
- Bereitstellen eines erhöhten Drucks, der eine erhöhte Kraft (F) auf mindestens einen der Kolben (8, 8') verursacht, wobei die Kraft (F) in Richtung des anderen Kolbens (8', 8) gerichtet ist.

13. Verfahren nach Anspruch 11 oder 12, **dadurch gekennzeichnet, dass** die Kranstruktur (4) hydraulisch durch eine Anordnung angetrieben wird, die einen Hydraulikmotor (60) umfasst, der mechanisch mit einem Getrieberad (62) verbunden ist, das mit entsprechendem Eingriffsabschnitt (Zähnen) eines Zahnrads (6) in Eingriff gebracht wird, das an der Kranstruktur (4) angebracht ist, wobei das Verfahren den Schritt des Zuführens eines zusätzlichen Hydraulikölflusses und dadurch des Dämpfens der Bewegung des mindestens einen Hydraulikmotors (60) durch die zusätzliche Hydraulikeinheit (40) umfasst.

14. Verfahren nach einem der vorstehenden Ansprüche 11-13, **dadurch gekennzeichnet, dass** das Verfahren den Schritt des Anwendens einer Steuereinheit (46) umfasst, die konfiguriert ist, den Druck (P_{R}), der von der zusätzlichen Hydraulikeinheit (40) bereitgestellt wird, abhängig von einem oder mehreren Parametern, die entweder vordefiniert (unter Verwendung einer Steuereinheit festgelegt) und/oder von einem oder mehreren Sensoren (52, 54, 56) überwacht werden, zu steuern.

15. Kran, umfassend ein System nach einem der Ansprüche 1-10.

## Revendications

1. Système (2) pour amortir des oscillations indésirables dans une structure de grue agencée de façon mobile (4) hydrauliquement entraînée au moyen d'un agencement comprenant au moins un actionneur hydraulique (10, 10', 60) mécaniquement raccordé à une structure d'entrée en prise (6) attachée à la structure de grue (4), dans lequel l'au moins un actionneur hydraulique (10, 10', 60) est en communication fluidique avec une unité hydraulique (16) par l'intermédiaire d'un ou de plusieurs conduits (14, 14', 64, 66), dans lequel ladite unité hydraulique (16) est raccordée à une source de pression hydraulique (30), dans lequel l'unité hydraulique (16) comprend une vanne (108) configurée pour diriger de l'huile hydraulique provenant de la source de pression hydraulique (30) vers l'au moins un actionneur hydraulique (10, 10', 60), **caractérisé en ce que** le système (2) comprend un élément amortisseur (3) comprenant une unité hydraulique supplémentaire (40) hydrauliquement raccordée à la source de pression hydraulique (30) et à l'au moins un actionneur hydraulique (10, 10', 60), où l'unité hydraulique supplémentaire (40) est raccordée à la source de pression hydraulique (30) par l'intermédiaire d'un conduit (38, 74) agencé de manière telle que l'écoulement de fluide hydraulique supplémentaire puisse être distribué à l'unité hydraulique supplémentaire (40) par la source de pression hydraulique (30) sans s'écouler à travers l'unité hydraulique (16), moyennant quoi l'unité hydraulique supplémentaire (40) est configurée pour distribuer un écoulement d'huile hydraulique supplémentaire et ainsi amortir le mouvement de l'au moins un actionneur hydraulique (10, 10', 60).

2. Système (2) selon la revendication 1, **caractérisé en ce que** la structure de grue (4) étant hydrauliquement entraînée au moyen d'un agencement comprenant :
- un premier actionneur hydraulique (10) ayant un piston (8) raccordé à une première extrémité d'une crémaillère de raccordement (18) ;
- un second actionneur hydraulique (10') ayant un piston (8') raccordé à une seconde extrémité de la crémaillère de raccordement (18), dans lequel ladite crémaillère de raccordement (18) comprend une partie d'entrée en prise (28) entrant en prise avec une partie d'entrée en prise correspondante (26) d'une structure d'entrée en prise (6) attachée à la structure de grue (4), dans lequel l'élément amortisseur (3) est configuré pour fournir une pression augmentée causant une force augmentée (F) sur au moins un des pistons (8, 8'), ladite force (F) étant dirigé vers l'autre piston (8', 8).

3. Système (2) selon la revendication 1, **caractérisé en ce que** la structure de grue (4) est hydrauliquement entraînée au moyen d'un agencement comprenant un moteur hydraulique (60) mécaniquement raccordé à une roue d'engrenage (62) mise en prise avec une partie d'entrée en prise correspondante (dents) d'une roue dentée (6) attachée à la structure de grue (4).

4. Système (2) selon la revendication 1 ou la revendication 2, **caractérisé en ce que** les actionneurs hydrauliques (10, 10') comprennent une chambre arrière remplie de liquide (12, 12') et que l'élément amortisseur (3) comprend, ou est raccordé à, une source de pression hydraulique (30) en communication fluidique avec la chambre arrière (12, 12') d'au moins un des actionneurs hydrauliques (10, 10'), de préférence des deux actionneurs hydrauliques (10, 10').

5. Système (2) selon la revendication 2, **caractérisé en ce que** la source de pression hydraulique (30) est une source de pression hydraulique de la grue.

6. Système (2) selon l'une des revendications précédentes, **caractérisé en ce que** l'élément amortisseur (3) comprend une vanne de réduction de pression (102) et une vanne de commande (100).

7. Système (2) selon l'une des revendications précédentes, **caractérisé en ce que** le système (2) comprend une unité de commande (46) configurée pour commander la pression (P_{R}) fournie par l'unité hydraulique supplémentaire (40) en fonction d'un ou de plusieurs paramètres prédéfinis et/ou surveillés par un ou plusieurs capteurs (52, 54, 56).

8. Système (2) selon la revendication 7, **caractérisé en ce que** l'unité de commande (46) est configurée pour commander la pression (P_{R}) fournie par l'unité hydraulique supplémentaire (40) de manière telle que la pression (P_{R}) varie en fonction du temps.

9. Système (2) selon l'une des revendications précédentes, **caractérisé en ce que** le système (2) comprend un ou plusieurs capteurs (52, 54, 56) pour détecter un ou plusieurs paramètres, dans lequel les un ou plusieurs capteurs (52, 54, 56) incluent un ou plusieurs des capteurs suivants (52, 54, 56) : un capteur d'inclinaison, un capteur configuré pour surveiller une position linéaire et/ou une vitesse linéaire et/ou une position angulaire et/ou une vitesse angulaire, un capteur de température, un capteur de pression, un capteur de débit ou un capteur pour détecter la distance entre le point auquel une charge est fixée à un bras de grue (4) et une position de la charge (20) ou pour détecter la distance entre la charge (20) et le point autour duquel le bras de grue (4) entre en rotation.

10. Système (2) selon l'une des revendications précédentes, **caractérisé en ce que** le système (2) comprend un ou plusieurs orifices de réapprovisionnement pour réapprovisionner le(s) actionneur(s) hydraulique(s) (10, 10', 60) en huile hydraulique.

11. Procédé pour amortir des oscillations indésirables dans une structure de grue agencée de façon mobile (4) hydrauliquement entraînée au moyen d'un agencement comprenant au moins un actionneur hydraulique (10, 10', 60) mécaniquement raccordé à une structure d'entrée en prise (6) attachée à la structure de grue (4), dans lequel l'actionneur hydraulique (10, 10', 60) est en communication fluidique avec une unité hydraulique (16) par l'intermédiaire d'un ou de plusieurs conduits (14, 14', 64, 66), dans lequel ladite unité hydraulique (16) est raccordée à une source de pression hydraulique (30), dans lequel l'unité hydraulique (16) comprend une vanne (108) configurée pour diriger de l'huile hydraulique provenant de la source de pression hydraulique (30) vers l'actionneur hydraulique (10, 10', 60), **caractérisé en ce que** le procédé comprend l'étape de l'amortissement du mouvement de l'ensemble à actionneur hydraulique au moyen d'un élément amortisseur (3) comprenant une unité hydraulique supplémentaire (40) hydrauliquement raccordée à une source de pression hydraulique (30) et à l'actionneur hydraulique (10, 10', 60), en distribuant un écoulement d'huile hydraulique supplémentaire et ainsi amortissant le mouvement de l'actionneur hydraulique (10, 10', 60) au moyen de l'unité hydraulique supplémentaire (40), où l'unité hydraulique supplémentaire (40) est raccordée à la source de pression hydraulique (30) par l'intermédiaire d'un conduit (38, 74) agencé de manière telle que l'écoulement de fluide hydraulique supplémentaire puisse être distribué à l'unité hydraulique supplémentaire (40) par la source de pression hydraulique (30) sans s'écouler à travers l'unité hydraulique (16).

12. Procédé selon la revendication 11, **caractérisé en ce que** la structure de grue (4) est hydrauliquement entraînée au moyen d'un agencement comprenant :
- un premier vérin hydraulique (10) ayant un piston (8) raccordé à une première extrémité d'une crémaillère de raccordement (18) ;
- un second vérin hydraulique (10') ayant un piston (8') raccordé à une seconde extrémité de la crémaillère de raccordement (18), dans lequel ladite crémaillère de raccordement (18) comprend une partie d'entrée en prise (28) entrant en prise avec une partie d'entrée en prise correspondante (26) d'une structure d'entrée en prise (6) attachée à la structure de grue (4), dans lequel le procédé comprend l'étape suivante :
- la fourniture d'une pression augmentée causant une force augmentée (F) sur un des pistons (8, 8'), ladite force (F) étant dirigée vers l'autre piston (8', 8).

13. Procédé selon la revendication 11 ou 12, **caractérisé en ce que** la structure de grue (4) est hydrauliquement entraînée au moyen d'un agencement comprenant un moteur hydraulique (60) mécaniquement raccordé à une roue d'engrenage (62) mise en prise avec une partie d'entrée en prise correspondante (dents) d'une roue dentée (6) attachée à la structure de grue (4), dans lequel le procédé comprend l'étape de la distribution d'un écoulement d'huile hydraulique supplémentaire et ainsi l'amortissement du mouvement de l'au moins un moteur hydraulique (60) au moyen de l'unité hydraulique supplémentaire (40).

14. Procédé selon l'une des revendications précédentes 11 à 13, **caractérisé en ce que** le procédé comprend l'étape de l'application d'une unité de commande (46) configurée pour commander la pression (P_{R}) fournie par l'unité hydraulique supplémentaire (40) en fonction d'un ou de plusieurs paramètres prédéfinis (réglés en utilisant une unité de commande) et/ou surveillés par un ou plusieurs capteurs (52, 54, 56).

15. Grue, comprenant un système selon l'une des revendications 1 à 10.
